# EUROPÄISCHE PATENTSCHRIFT

(11) **EP 2 931 092 B1**
(45) Veröffentlichungstag und Bekanntmachung des Hinweises auf die Patenterteilung: **28.06.2017**
(21) Anmeldenummer: 13801539.1
(22) Anmeldetag: 03.12.2013
(51) Int. Cl.: A47J 31/44

(54) **MILCHAUFSCHÄUMVORRICHTUNG MIT EXTERNER MILCHBEREITSTELLUNG**
MILK FROTHING DEVICE HAVING EXTERNAL MILK PROVISION
DISPOSITIF POUR FAIRE MOUSSER LE LAIT AVEC MISE À DISPOSITION EXTERNE DU LAIT

(30) Priorität: 12.12.2012 DE 202012104836 U
(43) Veröffentlichungstag der Anmeldung: 21.10.2015
(73) Patentinhaber: Melitta Europa GmbH & Co. KG, 32427 Minden (DE); Eugster/Frismag AG, 8580 Amriswil (CH)
(72) Erfinder: KRUTEMEYER, Nils, 32278 Kirchlengern (DE); NEUHAUS, Sven, 32549 Bad Oeynhausen (DE); SCHANDL, Gerold, 32425 Minden (DE); RIESSBECK, Wolfgang, 8597 Landschlacht (CH)
(74) Vertreter: Dantz, Jan Henning
(86) Internationale Anmeldenummer: PCT/EP2013/075404
(87) Internationale Veröffentlichungsnummer: WO 2014/090638

(56) Entgegenhaltungen:
- EP-A1- 0 791 321
- WO-A1-2005/112717
- DE-U1-202011 109 479
- US-A- 5 738 002

## Beschreibung

Die Erfindung bezieht sich auf eine Milchaufschäumvorrichtung mit externer Milchbereitstellung, wie sie in Heißgetränkemaschinen, wie beispielsweise einem Kaffeevollautomaten zur Anwendung kommen.

Eine Kaffee-/Espressomaschine mit einer Milchschaumerzeugungseinrichtung für Cappuccino ist in der DE 20 2011 109 479 U1 offenbart, deren Milchschaumerzeugungseinrichtung eine Venturidüse in einem Strömungskanal zwischen einer Dampfzuleitung und einer Misch- und Schaumkammer und einer in Durchflussrichtung auf diese folgende Düsenanordnung umfasst, die nach dem Prinzip einer Lavaldüse funktioniert. Die Milchzufuhrleitung ist zu einer Seite der Kaffee-/Espressomaschine aus der Milchschaumerzeugungseinrichtung herausgeführt und auf Grund der gewählten Konstruktion der Milchschaumerzeugungseinrichtung in ihrer Position und damit einhergehend in ihrer Leitungsführung nicht veränderbar. Ein externer Milchbehälter ist also nur an einer - vordefinierten- Seite an der Kaffee-/Espressomaschine sinnvoll platzierbar.

Dadurch ergeben sich bei beengten Platzverhältnissen im Bereich des Aufstellungsortes der Kaffee-/Espressomaschine und bei der Bedienung der Maschine und/oder der Handhabbarkeit des externen Milchbehälters durch Linkshänder Probleme.

Die EP 791 321 A1 offenbart eine Kaffeemaschine, bei der Milchaufschäumvorrichtung vorgesehen ist, die einen Milchbehälter und eine Dampfleitung aufweist, die über eine Venturi-Düse die Milch ansaugt.

Der Erfindung liegt daher die Aufgabe zu Grunde, eine Milchaufschäumvorrichtung mit externer Milchbereitstellung zu schaffen, die diese Probleme überwindet.

Die Erfindung löst diese Aufgabe dadurch, dass die Milchaufschäumvorrichtung eine Milchmischeinheit aufweist, die in mindestens zwei unterschiedlichen Einbaulagen in die Milchaufschäumvorrichtung einbaubar ist, so dass ein externer Milchbehälter sowohl auf der rechten als auch auf der linken Seite einer Heißgetränkemaschine platziert werden kann. Dies ist bei einseitig beengten Platzverhältnissen am Aufstellungsort einer Heißgetränkemaschine mit externem Milchbehälter oder bei Benutzern bzw. Bedienern einer Heißgetränkemaschine mit externem Milchbehälter von Vorteil, die Linkshänder sind.

Vorzugsweise ist die Milchmischeinheit um etwa 180° gedreht in einem Gehäuse einbaubar. Dabei kann die Milchmischeinheit eine seitlich angeordnete Milchleitung, sowie an einer Oberseite einen Dampfanschluss und mindestens einen Luftanschluss aufweisen. Die Milchleitung kann dann seitlich von der rechten oder linken Seite zugeführt sein, während der Dampfanschluss und der Luftanschluss an einer Oberseite der Milchmischeinheit vorgesehen sind, so dass auf einfache Weise eine Drehung der Milchmischeinheit vorgenommen werden kann.

Gemäß einer bevorzugten Ausgestaltung der Erfindung weist die Milchmischeinheit Befestigungsmittel zur Festlegung an einem Grundkörper oder einem Gehäuse auf, die zu einer mittleren Ebene symmetrisch angeordnet sind.
Die Milchmischeinheit kann beispielsweise durch eine Rastverbindung auf einen Grundkörper aufgerastet werden, so dass sie sich von dem Grundkörper leicht lösen und dann um 180° gedreht wieder einbauen lässt. Die Reinigung der Milchmischeinheit wird dadurch ebenfalls in vorteilhafter Weise erleichtert.

Der Grundkörper, auf dem die Milchmischeinheit montiert ist, kann ebenfalls durch Rasthaken an einem vertikal beweglichen Schlitten verrastet sein, der an der Bedienseite der Heißgetränkemaschine angebracht ist. Die Milchaufschäumvorrichtung kann dadurch in vorteilhafter Weise als Einheit aus der Heißgetränkemaschine entnommen werden. Dies erleichtert die Reinigung der gesamten Milchaufschäumvorrichtung.

Erfindungsgemäß weist die Milchmischeinheit auf einer Seite einen Milchleitungsanschlussblock und auf der gegenüberliegenden Seite einen Block ohne Anschluss für einen Milchleitung auf. Dabei können der Milchanschlussblock und der Block jeweils durch eine der beiden seitlichen Wandungen des Gehäuses des Schlittens nach außen durchgeführt sein, so dass auf einer Seite des Gehäuses eine Leitung zur Milchzuführung anschließbar ist und auf der gegenüberliegenden Seite der weitere Block eine Öffnung nur verschließt.

Für einen kompakten Aufbau ist in der Milchmischeinheit ist eine Mischkammer ausgebildet, in die eine Milchleitung und ein Dampfanschluss münden. Die Milchmischeinheit weist ferner einen Luftanschluss auf, der beabstandet von der Mischkammer in die Milchleitung mündet, so dass die Milch schon vor dem Erhitzen mit dem Dampf mit Luft angereichert wird. Dies verbessert die Herstellung von Milchschaum. Die Milchmischeinheit kann auf einfache Weise durch ein einstückig hergestelltes Bauteil, vorzugsweise aus Kunststoff, hergestellt sein. Es ist auch möglich, die Milchmischeinheit aus mehreren Bauteilen herzustellen, die beispielsweise abgedichtet aneinander gehalten sind.

Weitere vorteilhafte Ausführungen der erfindungsgemäßen Milchaufschäumvorrichtung mit externer Milchbereitstellung sind den Unteransprüchen zu entnehmen.

Ausführungsbeispiele der erfindungsgemäßen Milchaufschäumvorrichtung mit externer Milchbereitstellung sind in den Zeichnungen dargestellt und werden im Folgenden näher beschrieben. Es zeigen:
- Figur 1:: eine perspektivische Schnittdarstellung einer erfindungsgemäßen Milchaufschäumvorrichtung im montierten Zustand,
- Figur 2:: eine Seitenansicht der Milchaufschäumvorrichtung der Figur 1,

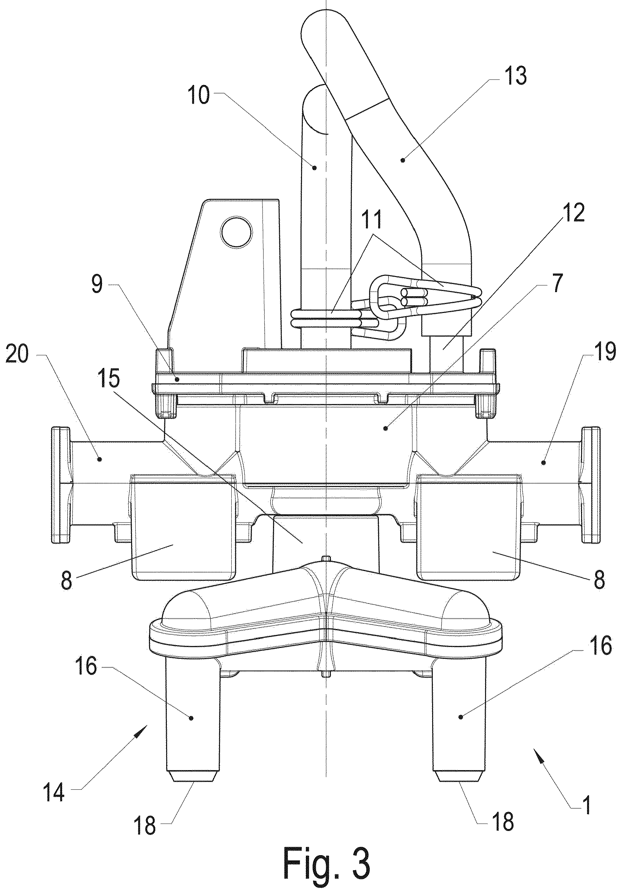

- Figur 3:: eine Vorderansicht der Milchaufschäumvorrichtung der Figur 2,
- Figur 4:: eine perspektivische Ansicht der zentralen Milchmischeinheit ohne angrenzende Bauteile,
- Figur 5:: eine perspektivische Ansicht der zentralen Milchmischeinheit der Figur 4, und
- Figur 6:: eine Schnittdarstellung der zentralen Milchmischeinheit der Figur 4.

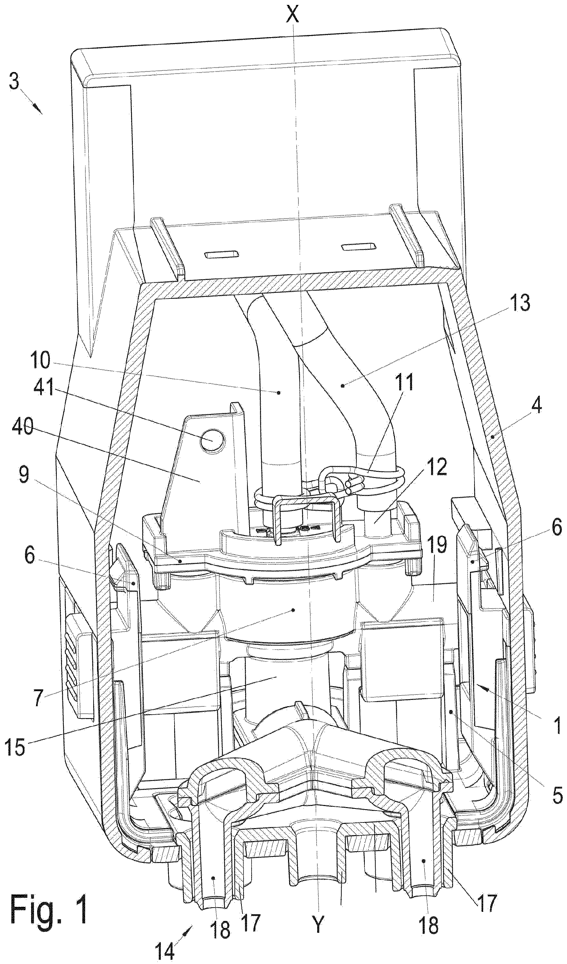

Figur 1 zeigt eine Milchaufschäumvorrichtung 1, wie sie beispielsweise bei einer Heißgetränkemaschine zur Anwendung kommt. Die Milchaufschäumvorrichtung 1 ist in einen vertikal beweglichen Schlitten 3 eingebaut, der an der Bedienseite eines Gehäuses einer Heißgetränkemaschine (nicht dargestellt) angebracht ist. Die Einzelteile der Milchaufschäumvorrichtung 1 bauen auf einen, in Bezug auf die Symmetrieebene, die durch die Symmetrieachse X-Y und der Normalen der Zeichenblattebene aufgespannt wird, symmetrischen Grundkörper 5 auf. Der Grundkörper 5 ist über Rasthaken 6 mit dem Schlitten 3 lösbar verbunden und ist dadurch bei Bedarf - z.B. für Reinigungszwecke - einfach vom Schlitten 3 demontierbar.

Oberhalb des Grundkörpers 5 befindet sich eine Milchmischeinheit 7, die zur einfachen Montage und Demontage mit Rasthaken 8 am Grundkörper 5 verrastet ist. Oberhalb der Milchmischeinheit 7 schließt sich ein Deckel 9 an, der mit der Milchmischeinheit 7 dicht verbunden ist, beispielsweise durch Schraubverbindungen. An der Oberseite des Deckels 9 der Milchmischeinheit 7 sind eine Dampfleitung 10 und eine Luftleitung 13 angeschlossen, die über Klemmen 11 an Anschlussstutzen 12 des Deckels 9 fixiert sind. Der Deckel 9 ist über einen Vorsprung 40 und Befestigungsmittel, die durch eine Öffnung 41 an dem Vorsprung 40 geführt sind, an dem Gehäuse 4 festgelegt.

Die Milchmischeinheit 7 weist auf einer Seite einen Milchleitungsanschlussblock 19 auf, der an einer Außenseite durch eine seitliche Wandung des Gehäuses 4 des Schlittens 3 nach außen durchgeführt ist. An dem Milchanschlussblock 19 ist an der Außenseite eine Öffnung ausgebildet, so dass über eine Leitung ein externer Milchbehälter einfach an die Milchaufschäumvorrichtung 1 anschließbar ist. Auf der zu dem Milchanschlussblock 19 gegenüberliegenden Seite ist an der Milchmischeinheit 7 ein weiterer Block 20 ausgebildet, der eine seitliche Wandung des Gehäuses 4 des Schlittens 3 durchgreift. Der Block 20 besitzt an seiner Außenseite jedoch keine Öffnung zum Anschluss einer Leitung, sondern ist geschlossen ausgebildet. Dadurch kann allerdings die einstückig ausgebildete Milchmischeinheit 7 um die Hochachse um 180° gedreht an dem Gehäuse 4 montiert werden. Auch die Rasthaken 8 sind symmetrisch zur Hochachse angeordnet, so dass eine Montage der Milchmischeinheit 7 mit dem Milchanschlussblock 19 auf der rechten oder der linken Seite des Gehäuses 4 möglich ist.

Unterhalb der Milchmischeinheit 7 schließt sich ein Heißgetränkeauslass 14 an. Der Heißgetränkeauslass 14 ist mit einem Stutzen 15 an der Unterseite der Milchmischeinheit 7 angeschlossen und weist einen Verteiler auf, an dem sich die Leitung von der Milchmischeinheit 7 in zwei separate, V-förmig nach vorn in einer orthogonalen Ebene zur vertikalen Führung des Schlittens 3 verlaufende Auslassleitungen 16 mündet, die um 90° oberhalb der Grundplatte 17 des Grundkörpers 5 nach unten in Durchflussrichtung abbiegen und schließlich in den beiden Auslässen 18 münden. Die Auslässe 18 sind dabei durch umgebende zylindrische Durchlässe 17 in einer Grundplatte 30 geführt und positioniert. In der Grundplatte 30 können ferner ein oder mehrere Öffnungen 31 zu Belüftung vorgesehen sein.

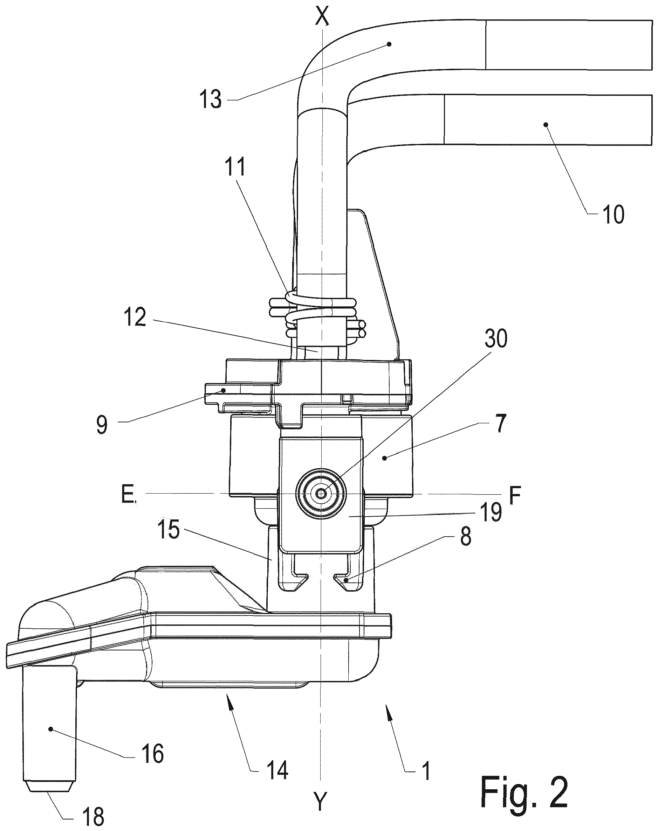

In Fig. 2 ist der Aufbau der Milchaufschäumvorrichtung 1 in einer Seitenansicht dargestellt. Gut erkennbar sind die Rasthaken 8, mit denen die Milchmischeinheit 7 auf dem Grundkörper 5 (nicht dargestellt) lösbar aufgerastet wird. Ferner ist der Milchleitungsanschlussblock 19 der Milchmischeinheit 7 gezeigt, an dessen Außenseite eine Öffnung einer Milchleitung 30 vorgesehen ist.

Die Milchmischeinheit 7 kann in zwei unterschiedlichen Positionen an dem Gehäuse 4 montiert sein. Für eine Änderung der Montageposition wird das Gehäuse 4 demontiert, die Rasthaken 8 von dem Grundkörper 5 gelöst und die Milchmischeinheit 7 relativ zu dem Deckel 9 und dem Stutzen 15 um 180° gedreht. Anschließend können die Befestigungsmittel zur Fixierung des Deckels 9 an der Milchmischeinheit 7 fixiert und das Gehäuse 4 wieder montiert werden. Der Milchanschlussblock 19 kann somit je nach Bedarf sowohl auf der rechten Seite des Gehäuses 4 als auch auf der linken Seite des Gehäuses 4 angeordnet werden.

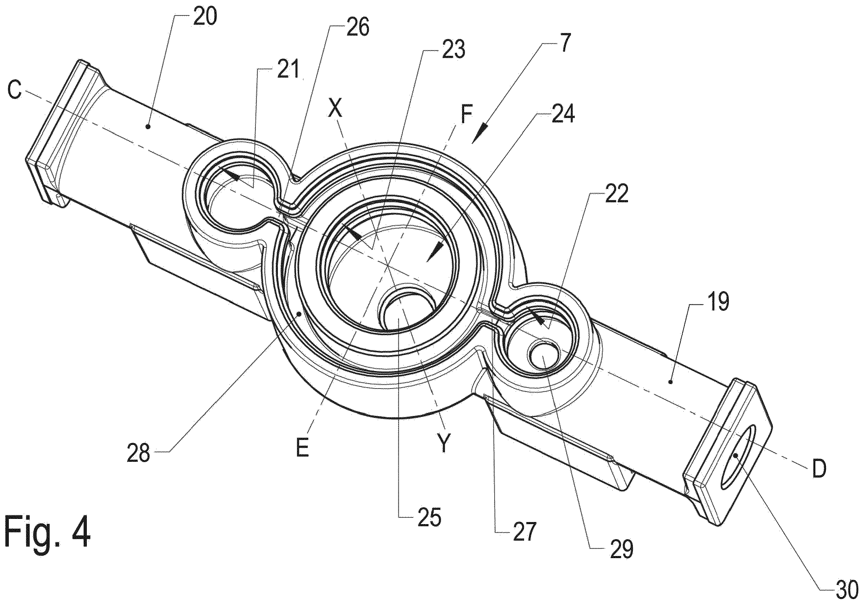

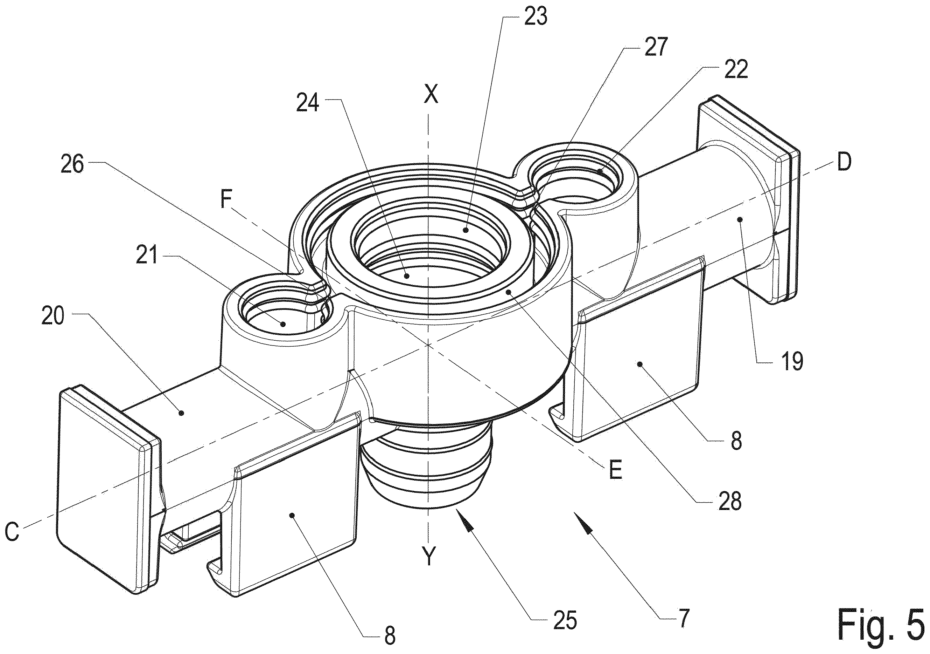

In den Fig. 4 bis 6 ist die einstückig hergestellte Milchmischeinheit 7 ohne angrenzende Bauteile dargestellt.

Die Milchmischeinheit 7 ist in der äußeren Form ein in Bezug auf die Symmetrieebenen, die zwischen den Symmetrieachsen X-Y und E-F sowie zwischen den Symmetrieachsen X-Y und C-D aufgespannt werden, symmetrisches, einstückiges Bauteil. Zumindest die Rasthaken 8 und der Milchleitungsanschlußblock 19 bzw. der Block 20 sind zu der Mittelebene symmetrisch angeordnet.

Die Milchmischeinheit 7 weist um die mittlere Achse X-Y einen zentralen Dampfanschluss 23 auf, in den die Dampfleitung 10 einmündet. Der Dampfanschluss 23 mündet in eine Mischkammer 24, die sich in Durchströmrichtung schließlich zu einem düsenförmigen Auslass 25 verjüngt, an den der Stutzen 15 des Heißgetränkeauslasses 14 angeschlossen ist. Ferner weist die Milchmischeinheit 7 in Bezug auf die Symmetrieebene, die durch die Symmetrieachsen X-Y und E-F aufgespannt wird, zwei symmetrische Luftanschlüsse 21 und 22 auf, in die durch den Anschlussstutzen 12, der mit der Luftleitung 13 verbunden ist, Luft in die Milchmischeinheit 7 einleitbar ist. Beide Luftanschlüsse 21 und 22 weisen jeweils eine Verbindung 26 bzw. 27 zu einem Luftverteilerring 28 auf. Durch den Deckel 9 und den Anschlussstutzen 12 ist allerdings nur einer der beiden Luftanschlüsse 21 oder 22 tatsächlich angeschlossen, während der andere Luftanschluss 21 oder 22 ein Blindanschluss ohne Funktion ist. Zudem ist der Luftverteilerring 28 im eingebauten Zustand vorzugsweise nur über einen Halbkreis offen.

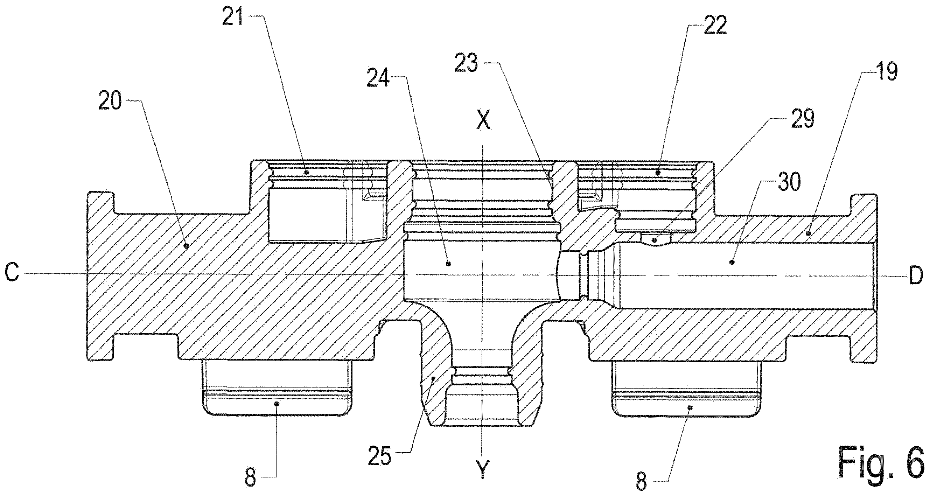

Wie insbesondere in Fig. 6 gezeigt ist, weist der Luftanschluss 22 eine Verbindung 29 zur Milchleitung 30 auf, die zwischen einer Außenseite der Milchleitung 30 und der Mischkammer 24 angeordnet ist. Der Luftanschluss 21 ist über den Luftverteilerring 28 mit dem Luftanschluss 22 und dadurch über die Verbindung 29 mit der Milchleitung 30 verbunden. Der benachbart zu dem Luftanschluss 21 angeordnete Block 20 ist geschlossen ausgebildet.

Durch die Symmetrie der Milchmischeinheit 7 kann je nach Bedarf durch einfaches Drehen der Milchmischeinheit 7 um 180° ein externer Milchbehälter sowohl auf der rechten als auch auf der linken Seite eines Kaffeevollautomaten angeschlossen werden. Wenn das Gehäuse 4 im Bereich der Milchmischeinheit 7 entsprechend ausgebildet ist, beispielsweise halbkreisförmig, ist es auch möglich, die Milchmischeinheit 7 stufenlos in Zwischenpositionen zwischen 0° und 180° einzubauen.

Durch die einfache Demontagemöglichkeit sämtlicher Bauteile der Milchaufschäumvorrichtung 1 ist eine einfache Reinigung der gesamten Milchaufschäumvorrichtung 1 möglich, so dass ein hygienisch einwandfreier Zustand der Milchaufschäumvorrichtung 1 gewährleistet ist. Grundsätzlich ist eine Reinigung der Milchaufschäumvorrichtung 1 durch Einblasen von Luft oder Dampf durch die Dampfleitung 10 und/oder die Luftleitung 13 möglich.

### Bezugszeichenliste

- 1: Milchaufschäumvorrichtung
- 2: Heißgetränkemaschine
- 3: Schlitten
- 4: Gehäuse
- 5: Grundkörper
- 6: Rasthaken
- 7: Milchmischeinheit
- 8: Rasthaken
- 9: Deckel
- 10: Dampfleitung
- 11: Klemmen
- 12: Anschlussstutzen
- 13: Luftleitung
- 14: Heißgetränkeauslass
- 15: Zentraler Raum
- 16: Auslassleitung
- 17: Grundplatte
- 18: Auslass
- 19: Milchleitungsanschlussblock
- 20: Block
- 21: Luftanschluss
- 22: Luftanschluss
- 23: Dampfanschluss
- 24: Mischkammer
- 25: Auslass
- 26: Verbindung
- 27: Verbindung
- 28: Luftverteilerring
- 29: Verbindung
- 30: Milchleitung
- 40: Vorsprung
- 41: Öffnung

## Patentansprüche

1. Milchaufschäumvorrichtung (1) mit externer Milchbereitstellung für Heißgetränkemaschinen, wobei die Milchaufschäumvorrichtung (1) eine Milchmischeinheit (7) aufweist, die in mindestens zwei unterschiedlichen Einbaulagen in die Milchaufschäumvorrichtung (1) einbaubar ist, so dass ein externer Milchbehälter sowohl auf der rechten als auch auf der linken Seite einer Heißgetränkemaschine (2) platziert werden kann, **dadurch gekennzeichnet, dass** die Milchmischeinheit (7) auf einer Seite einen Milchleitungsanschlussblock (19) und auf der gegenüberliegenden Seite einen Block (20) ohne Anschluss für einen Milchleitung aufweist.

2. Milchaufschäumvorrichtung (1) nach Anspruch 1, **dadurch gekennzeichnet, dass** die Milchmischeinheit (7) um etwa 180° gedreht in einem Gehäuse (4) einbaubar ist.

3. Milchaufschäumvorrichtung (1) nach Anspruch 1 oder 2, **dadurch gekennzeichnet, dass** die Milchmischeinheit (7) eine seitlich angeordnete Milchleitung (30), sowie an einer Oberseite einen Dampfanschluss (23) und mindestens einen Luftanschluss (21, 22) aufweist.

4. Milchaufschäumvorrichtung (1) nach einem der Ansprüche 1 bis 3, **dadurch gekennzeichnet, dass** die Milchmischeinheit (7) Befestigungsmittel (8) zur Festlegung an einem Grundkörper (5) oder einem Gehäuse (4) aufweist, die zu einer mittleren Ebene (F-E, X-Y) symmetrisch angeordnet sind.

5. Milchaufschäumvorrichtung (1) nach einem der vorgenannten Ansprüche, **dadurch gekennzeichnet, dass** der Milchanschlussblock (19) und der Block (20) jeweils durch eine der beiden seitlichen Wandungen des Gehäuses (4) des Schlittens (3) nach außen durchgeführt sind.

6. Milchaufschäumvorrichtung (1) nach einem der vorgenannten Ansprüche, **dadurch gekennzeichnet, dass** in der Milchmischeinheit (7) eine Mischkammer (24) ausgebildet ist, in die eine Milchleitung (30) und ein Dampfanschluss (23) münden und die Milchmischeinheit (7) einen Luftanschluss (22) aufweist, der beabstandet von einer Mischkammer (24) in die Milchleitung (30) mündet.

7. Milchaufschäumvorrichtung (1) nach einem der vorgenannten Ansprüche, **dadurch gekennzeichnet, dass** die Milchmischeinheit (7) einen zentralen Dampfanschluss (23) aufweist, der um eine mittlere Hochachse (X-Y) symmetrisch angeordnet ist.

8. Milchaufschäumvorrichtung (1) nach einem der vorgenannten Ansprüche, **dadurch gekennzeichnet, dass** die Milchmischeinheit (7) mindestens einen Rasthaken (8) aufweist, mit dem sie auf einen Grundkörper (5) aufgerastet ist.

9. Milchaufschäumvorrichtung (1) nach einem der vorgenannten Ansprüche, **dadurch gekennzeichnet, dass** der Grundkörper (5) durch Rasthaken (6) am Schlitten (3) verrastet ist.

10. Milchaufschäumvorrichtung (1) nach einem der vorgenannten Ansprüche, **dadurch gekennzeichnet, dass** die Milchmischeinheit (7) ein einstückiges Bauteil ist, vorzugsweise aus Kunststoff.

11. Milchaufschäumvorrichtung (1) nach einem der vorgenannten Ansprüche, **dadurch gekennzeichnet, dass** die Milchmischeinheit (7) zwei voneinander beabstandete Luftanschlüsse (21, 22) aufweist.

12. Milchaufschäumvorrichtung (1) nach Anspruch 11, **dadurch gekennzeichnet, dass** die zwei Luftanschlüsse (21, 22) symmetrisch zur zentralen Hochachse (X-Y) der Milchmischeinheit (7) angeordnet sind.

13. Milchaufschäumvorrichtung (1) nach einem der vorgenannten Ansprüche, **dadurch gekennzeichnet, dass** die beiden Luftanschlüsse (22, 21) über eine Verbindungsleitung (28) miteinander verbunden sind, und nur ein Luftanschluss (22) durch eine Verbindung (29) an die Milchleitung (30) angeschlossen ist und die Verbindungsleitung (28) vorzugsweise einen um den Dampfanschluss (23) angeordneten Luftverteilerkanal aufweist.

14. Heißgetränkeautomat (2) mit einer Milchaufschäumvorrichtung (1) mit externer Milchbereitstellung nach einem der vorgenannten Ansprüche.

15. Heißgetränkeautomat nach Anspruch 14, **dadurch gekennzeichnet, dass** die Milchaufschäumvorrichtung (1) in einem in der Höhe verstellbaren Schlitten (3) integriert ist, der am Gehäuse (4) der Heißgetränkemaschine auf der Bedienseite angebracht ist.

## Claims

1. Milk frothing device (1) with external milk preparation for hot drinks machines, wherein the milk frothing device (1) comprises a milk mixing unit (7) installable in the milk frothing device (1) in at least two different installation positions so that an external milk container can be placed not only on the righthand, but also on the lefthand side of a hot drinks machine (2), **characterised in that** the milk mixing unit (7) has on one side a milk conduit connecting block (19) and on the opposite side a block (20) without a connection for a milk conduit.

2. Milk frothing device (1) according to claim 1, **characterised in that** the milk mixing unit (7) is installable, turned through approximately 180°, in a housing (4)

3. Milk frothing device (1) according to claim 1 or 2, **characterised in that** the milk mixing unit (7) has a laterally arranged milk conduit (30) as well as, at an upper side, a steam connection (23) and at least one air connection (21, 22).

4. Milk frothing device (1) according to any one of claims 1 to 3, **characterised in that** the milk mixing unit (7) has securing means (8) for securing to a base body (5) or a housing (4), which is arranged symmetrically with respect to a centre plane (F-E, X-Y).

5. Milk frothing device (1) according to any one of the preceding claims, **characterised in that** the milk connecting block (19) and the block (20) are each led to the outside through one of the two lateral walls of the housing (4) of the slide (3).

6. Milk frothing device (1) according to any one of the preceding claims, **characterised in that** a mixing chamber (24), into which a milk conduit (30) and a steam connection (23) open, is formed in the milk mixing unit (7) and the milk mixing unit (7) has an air connection (22) which opens into the milk conduit (30) at a spacing from a mixing chamber (24).

7. Milk frothing device (1) according to any one of the preceding claims, **characterised in that** the milk mixing unit (7) has a central steam connection (23) arranged symmetrically about a centre vertical axis (X-Y).

8. Milk frothing device (1) according to any one of the preceding claims, **characterised in that** the milk mixing unit (7) has at least one detent hook (8) by which it can be detented on a base body (5).

9. Milk frothing device (1) according to any one of the preceding claims, **characterised in that** the base body (5) is detented on the slide (3) by detent hooks (6).

10. Milk frothing device (1) according to any one of the preceding claims, **characterised in that** the milk mixing unit (7) is an integral component, preferably of plastics material.

11. Milk frothing device (1) according to any one of the preceding claims, **characterised in that** the milk mixing unit (7) has two mutually spaced-apart air connections (21, 22).

12. Milk frothing device (1) according to claim 11, **characterised in that** the two air connections (21, 22) are arranged symmetrically with respect to the central vertical axis (X-Y) of the milk mixing unit (7).

13. Milk frothing device (1) according to any one of the preceding claims, **characterised in that** the two air connections (22, 21) are connected together by way of a connecting line (28) and only one air connection (22) is connected with the milk line (30) by a connection (29), the connecting line (28) preferably having an air distributor channel arranged around the steam connection (23).

14. Hot drinks machine (2) with a milk frothing device (1) with external milk preparation according to any one of the preceding claims.

15. Hot drinks machine according to claim 14, **characterised in that** the milk frothing device (1) is integrated in a slide (3) which is adjustable in height and which is mounted on the housing (4) of the hot drinks machine on the operator side.

## Revendications

1. Dispositif permettant de faire mousser du lait (1) équipé d'un approvisionnement externe de lait, destiné à des machines de préparation de boissons chaudes, comportant une unité de mélange de lait (7) qui peut être montée dans au moins deux positions de montage différentes dans ce dispositif de sorte qu'un réservoir de lait externe puisse être positionné aussi bien du côté droit que du côté gauche d'une machine de préparation de boissons chaudes (2),
**caractérisé en ce que**
l'unité de mélange de lait (7) comporte sur un côté, un bloc de raccord d'une conduite de lait (19) et sur le côté opposé, un bloc (20) ne comportant pas de raccord pour une conduite de lait.

2. Dispositif permettant de faire mousser du lait (1) conforme à la revendication 1,
**caractérisé en ce que**
l'unité de mélange de lait (7) peut être montée dans un boîtier (4) en étant tournée d'environ 180°.

3. Dispositif permettant de faire mousser du lait (1) conforme à la revendication 1 ou 2,
**caractérisé en ce que**
l'unité de mélange de lait (7) comporte une conduite de lait (30) latérale ainsi que sur sa face supérieure, un raccord de vapeur (23) et au moins un raccord d'air (21, 22).

4. Dispositif permettant de faire mousser du lait (1) conforme à l'une des revendications 1 à 3,
**caractérisé en ce que**
l'unité de mélange de lait (7) comporte des moyens de fixation (8) pour permettre sa fixation sur un corps de base (5) ou sur un boîtier (4) qui sont symétriques par rapport à un plan médian (F-E, X-Y).

5. Dispositif permettant de faire mousser du lait (1) conforme à l'une des revendications précédentes,
**caractérisé en ce que**
le bloc de raccord d'une conduite de lait (19) et le bloc (20) sont respectivement traversés vers l'extérieur par l'une des deux parois latérales du boîtier (4) d'un coulisseau (3).

6. Dispositif permettant de faire mousser du lait (1) conforme à l'une des revendications précédentes,
**caractérisé en ce que**
dans l'unité de mélange de lait (7), est formée une chambre de mélange (24) dans laquelle débouchent une conduite de lait (30) et un raccord de vapeur (23) et l'unité de mélange de lait (7) comporte un raccord d'air (22) qui débouche dans la conduite de lait (30) à distance de la chambre de mélange (24).

7. Dispositif permettant de faire mousser du lait (1) conforme à l'une des revendications précédentes,
**caractérisé en ce que**
l'unité de mélange de lait (7) comprend un raccord de vapeur central (23) qui est installé symétriquement autour d'un axe vertical médian (X-Y).

8. Dispositif permettant de faire mousser du lait (1) conforme à l'une des revendications précédentes,
**caractérisé en ce que**
l'unité de mélange de lait (7) comporte au moins un crochet d'encliquetage (8) par lequel elle est encliquetée sur un corps de base (5).

9. Dispositif permettant de faire mousser du lait (1) conforme à l'une des revendications précédentes,
**caractérisé en ce que**
le corps de base (5) est enclenché sur le coulisseau (3) par des crochets d'encliquetage (6).

10. Dispositif permettant de faire mousser du lait (1) conforme à l'une des revendications précédentes,
**caractérisé en ce que**
l'unité de mélange de lait (7) est un élément en une seule pièce, de préférence en matériau synthétique.

11. Dispositif permettant de faire mousser du lait (1) conforme à l'une des revendications précédentes,
**caractérisé en ce que**
l'unité de mélange de lait (7) comporte deux raccords d'air (21, 22) situés à distance l'un de l'autre.

12. Dispositif permettant de faire mousser du lait (1) conforme à la revendication 11,
**caractérisé en ce que**
les deux raccords d'air (21, 22) sont situés symétriquement par rapport à l'axe vertical central (X-Y) de l'unité de mélange de lait (7).

13. Dispositif permettant de faire mousser du lait (1) conforme à l'une des revendications précédentes,
**caractérisé en ce que**
les deux raccords d'air (22, 21) sont reliés par une conduite de liaison (28), un seul raccord d'air (22) est connecté par une liaison (29) à la conduite de lait (30), et la conduite de liaison (28) comprend de préférence un canal de répartition d'air monté autour du raccord de vapeur (23).

14. Machine automatique de préparation de boissons chaudes (2) comprenant un dispositif permettant de faire mousser du lait (1) équipé d'un approvisionnement externe de lait conforme à l'une des revendications précédentes.

15. Machine automatique de préparation de boissons chaudes conforme à la revendication 14,
**caractérisé en ce que**
le dispositif permettant de faire mousser du lait (1) est intégré à un coulisseau (3) réglable en hauteur qui est monté côté utilisateur sur le boîtier (4) de la machine automatique de préparation de boissons chaudes.
